Europäisches Patentamt

European Patent Office

Office européen des brevets

(11) Veröffentlichungsnummer: **0 279 180**
**A1**

## EUROPÄISCHE PATENTANMELDUNG

(21) Anmeldenummer: **88100564.9**

(22) Anmeldetag: **16.01.88**

(51) Int. Cl.4: **C10G 47/20** , **B01J 21/02** , **B01J 29/36**

(30) Priorität: **21.01.87 DE 3701570**

(43) Veröffentlichungstag der Anmeldung:
**24.08.88 Patentblatt 88/34**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Thomas, Juergen, Dr.**
**Haardtstrasse 3**
**D-6701 Fussgoenheim(DE)**
Erfinder: **Himmel, Walter, Dr.**
**Theodor-Storm-Strasse 12**
**D-6718 Gruenstadt(DE)**
Erfinder: **Hoelderich, Wolfgang, Dr.**
**Mannheimer Strasse 18 c**
**D-6710 Frankenthal(DE)**
Erfinder: **Schwarzmann, Matthias, Dr.**
**Carl-Bosch-Strasse 54**
**D-6703 Limburgerhof(DE)**

(54) **Verfahren zur Herstellung von Mitteldestillaten mit verbesserten Kälteeigenschaften.**

(57) Die Anmeldung betrifft ein Verfahren zur Herstellung von Mitteldestillaten mit verbesserten Kälteeigenschaften durch Hydrocracken von Mineralölfraktionen wie leichten und schweren Gasölen, Vakuumgasölen, Rückstandsölen und Mischungen derselben bei Drucken von 20 bis 200 bar, Temperaturen von 150 bis 500°C und spezifischen Katalysatorbelastungen WHSV zwischen 0,1 und 10 kg/l x h, wobei man den Ausgangsstoff mit Wasserstoff in Gegenwart eines Katalysators behandelt, der einen kristallinen Borosilikatzeolith vom Pentasiltyp, ein spaltaktives amorphes Aluminiumsilikat als Trägermaterial und ein oder mehrere Metalle aus der Gruppe VI b und/oder Gruppe VIII des Peroidensystems enthält.

EP 0 279 180 A1

## Verfahren zur Herstellung von Mitteldestillaten mit verbesserten Kälteeigneschaften

Das Hydrocracken schwerer Mineralölfraktionen zur Herstellung von Mitteldestillaten hat in letzter Zeit infolge steigender Nachfrage an Bedeutung gewonnen. Kohlenwasserstoffe mit einem Siedebeginn oberhalb 200°C werden hierbei an geeigneten Katalysatoren unter bekannten Reaktionsbedingungen in Produkte vom Siedebereich von etwa 150 bis 360°C umgewandelt, die z.B. als Heizöl EL, Kerosin, Flugturbinen-und Dieselkraftstoff Verwendung finden.

Als hydrieraktive Komponenten der Katalysatoren finden ein oder mehrere Metalle der Gruppe VIII und Gruppe VI B Verwendung, die auf Trägern aus feuerfesten anorganischen Oxiden, amorphen und/oder kristallinen Alumosilikaten aufgetragen sind, vgl. US-PS 4 517 073 und US-PS 4 563 434. Dort sind unter den kristallinen Alumosilikaten, insbesondere die modifizierten Y-Typ-Zeolithe als besonders geeignet für das Hydrocracken zu Mitteldestillaten bezeichnet.

In EP-Anm. 94827 ist ein Hydrocrack-Hydrodewaxing-Verfahren unter Verwendung eines Katalysators bestehend aus Zeolith-Beta und Hydrierkomponenten zur Erzeugung von Destillaten und schwerem Heizöl mit reduziertem Pourpoint und reduzierter Viskosität beschrieben.

Ein Prozeß zum Hydrocracken von kohlenwasserstoffhaltigen Ausgangsstoffen unter Verwendung von Zeolithen des Y-und ZSM-5-Typs ist Gegenstand des EPA 101 177. In den Hydrocrackprodukten wird zwar eine Verbesserung der Kälteeigneschaften erreicht die Cetanindices sind jedoch umbefriedigend.

Die Erfindung betrifft ein Verfahren zur Herstellung von Mitteldestillaten mit verbesserten Kälteeigenschaften durch Hydrocracken von Mineralölfraktionen wie leichen und schweren Gasölen, Vakuumgasölen, Rückstandsölen und Mischungen derselben bei Drucken von 20 bis 200 bar, Temperaturen von 150 bis 500°C und spezifischen Katalysatorbelastungen (WHSV) zwischen 0,1 und 10 kg/lxH, bei dem man den Ausgangsstoff mit Wasserstoff in Gegenwart eines Katalysators behandelt, der einen kristallinen Borosilikatzeolith vom Pentasiltyp, ein spaltaktives kristallines Aluminiumsilikat als Trägermaterial, ein oder mehrere Metalle aus der Gruppe VI b und/oder Gruppe VIII des Periodensystems enthält.

Die Trägerzusammensetzung kann variieren, wobei der Katalysator 1 bis 60 Gew.-% Borosilikatzeolith des Pentasiltyps enthalten und in diesem das Molverhältnis $SiO_2/B_2O_3$ zweckmäßig größer als 20 ist. Zur Verbesserung der Crackaktivität kann man ggf. auch noch andere Aluminiumsilikate, z.B. kristalline Alumosilikate vom Faujasittyp zusetzen.

Mitteldestillate enthalten neben aromatischen, naphthenischen und verzweigten Paraffinkohlenwasserstoffen auch unverzweigte und wenig verzweigte Paraffine, die bei niedrigen Temperaturen für eine unerwünschte Verringerung der Fluidität verantwortlich sind. Sind Heizöle und Kraftstoffe bei niedrigen Temperaturen, z.B. im Winterbetrieb, nicht mehr fließfähig, so ergeben sich daraus Schwierigkeiten beim Transport über Leitungen und Pumpen bzw. durch Filter in einen Brenner, Motor oder eine Turbine.

Zur Beurteilung des Kälteverhaltens im Dieselkraftstoff, Heizöl EL usw. finden verschiedene, durch Prüfverfahren vorgeschriebene Bestimmungsmethoden Anwendung. So kennzeichnet der Pourpoint nach DIN 51597 die Temperatur, die sich beim Addieren von 3°C zu der abgelesenen Temperatur ergibt, bei der die Probe beim Abkühlen unter den Bedingungen der Norm nicht mehr fließfähig ist.

Während der Pourpoint also die Temperatur bestimmt, bei der ein Öl eben noch fließend ist, charakterisiert der Stockpunkt die Temperatur des Stockens (nicht mehr fließend).

Die Temperatur, bei der beim Abkühlen unter den Bedingungen von z.B. DIN 51597 die Probe beginnt, trübe zu werden oder Paraffin auszuscheiden, wird als Cloudpoint bezeichnet.

Die Bestimmung des Grenzwertes der Filtrierbarkeit z.B. nach DIN 51428 (CFPP) gibt Aufschluß über mögliche Störungen durch Paraffinausscheidung an Filtern bei niedrigen Temperaturen. Ausgefallene Paraffinkristalle verursachen bei Einsatz von Dieselkraftstoff bei tiefen Temperaturen ein Zusetzen der Filter im Kraftstoffsystem.

Der Grenzwert der Filtrierbarkeit wurde daher für Dieselkraftstoff für Motoren, die im Freien betrieben werden, z.B. in den Mindestanforderungen nach DIN 51601 auf max. -12°C festgeschrieben. Bedeutungsvoller als der Grenzwert der Filtrierbarkeit ist für Heizöl EL die Grenze der Fließfähigkeit. In der Bundesrepublik ist z.B. in Mindestanforderungen nach DIN 51603 ein Pourpoint von höchstens -6°C vorgeschrieben.

Ein weiteres wichtiges Merkmal für die motorische Eignung eines Dieselkraftstoffs ist die Zündwilligkeit. Gekennzeichnet wird die Zündwilligkeit durch die Cetanzahl, deren Bestimmung z.B. nach DIN 51773 erfolgen kann. Die Mindestanforderung nach DIN 51601 beträgt 45.

Die Mindestanforderungen an Heiz-und Kraftstoffe bezüglich der Kälteeigenschaften können in manchen Fällen durch Zusätze, wie z.B. geeignete Fließverbesserer erreicht werden. Dies ist jedoch nicht immer im gewünschten Umfang möglich. Eine andere Möglichkeit, die Kälteeigenschaften bezüglich vorgeschriebener Mindestanforderungen zu verbessern, besteht in der Absenkung der Siedelage, da die Verbindungen, die die Kälteeigenschaften hauptsächlich negativ beeinflussen, in höheren Destillationsschnitten enthalten sind. Dies führt jedoch zu erheblichen Ausbeuteverlusten wertvoller Destillatkomponenten. Desweiteren werden beim Hydrocracken stark paraffinhaltiger Einsatzprodukte in den Mitteldestillaten meist nur ungenügende Kälteeigenschaften erreicht. Es besteht daher die Aufgabe, Verfahren, die bei der Konversion von schweren Mineralölfraktionen Mitteldestillate mit verbesserten Kälteeigenschaften erzeugen, zu entwickeln.

Für das erfindungsgemäße Verfahren in Betracht kommende Katalysatoren enthalten als wesentliche Komponente Borosilikatzeolithe des Pentasiltyps. Diese haben als Grundbausteine einen aus $SiO_4$-Tetraedern aufgebauten Fünfring. Sie sind durch ein hohes $SiO_2/B_2O_3$-Verhältnis gekennzeichnet, sowie durch Porengrößen, die zwischen denen der Zeolithe vom Typ A und denen vom Typ X oder Y liegen.

Borsilikatzeolithe werden z.B. bei 90 bis 200°C unter autogenem Druck synthetisiert, indem man eine Borverbindung z.B. $H_3BO_3$ mit einer Siliciumverbindung, vorzugsweise hochdispersem Siliciumdioxid in wäßriger Aminlösung, insbesondere in 1,6-Hexandiamin-oder 1,3-Propandiamin-oder Triethylentetramin-Lösung mit und insbesondere ohne Alkali-oder Erdalkalizusatz zur Reaktion bringt. Hierzu gehören auch die isotaktischen Zeolithe nach EP 34727 und EP 46504. Solche Borosilikatzeolithe können ebenfalls hergestellt werden, wenn man die Reaktion statt in wäßriger Aminlösung in etherischer Lösung, z.B. Diethylenglykoldimethylether oder in alkoholischer Lösung, z.B. 1,6-Hexandiol durchführt. Wesentlich und besonders vorteilhaft ist die Synthese der Borosilikatzeolithe in wäßriger Polyamin-Lösung ohne Zusatz von Alkali.

Die so hergestellten Borosilikatzeolithe können nach ihrer Isolierung, Trocknung bei 100°C bis 160°C, vorzugsweise 110°C und Calcinierung bei 450°C bis 550°C, vorzugsweise 500°C, zusammen mit dem spaltaktiven amorphen und evtl. kristallinen Träger im Verhältnis 1:99 bis 60:40 Gew.-%, gegebenenfalls unter Verwendung eines Bindemittels zu Strängen oder Tabletten verformt werden. Als Bindemittel eignen sich diverse Aluminiumoxide, bevorzugt Boehmit, amorphe Alumosilikate mit einem $SiO_2/Al_2O_3$-Verhältnis von 25:75 bis 90:10, bevorzugt 75:25, Siliciumdioxid, bevorzugt hochdisperses $SiO_2$, Gemische aus hochdispersem $SiO_2$ und hochdispersem $Al_2O_3$ sowie Ton. Nach der Verformung werden die Extrudate oder Preßlinge bei 110°C/16 h getrocknet und bei 500°C/16 h calciniert.

Bei Mitverwendung von Zeolithen des Faujasit-Typs können diese zusammen mit dem Borosilikatzeolith nach der Trocknung verformt werden und erst nach der Verformung einer Calcinierung unterworfen werden.

Wenn bei der erfindungsgemäßen Verwendung der zeolithischen Katalysatoren eventuell eine durch Koksabscheidung bedingte Desaktivierung eintritt, empfiehlt es sich, die Zeolithe durch Abtrennen der Koksablagerung mit Luft oder mit einem Luft/$N_2$-Gemisch bei 400°C bis 550°C, bevorzugt 500°C, zu regenerieren. Die Zeolithe erhalten dadurch ihre Anfangsaktivität zurück.

Um eine möglichst hohe Selektivität, hohen Umsatz sowie lange Standzeiten zu erreichen, ist es vorteilhaft, die Zeolithe zu modifizieren. Eine geeignete Modifizierung der Katalysatoren besteht z.B. darin, daß man den unverformten oder verformten Zeolithen mit Metallsalzen durch einen Ionenaustausch oder durch Imprägnieren dotiert. Als Metalle werden Übergangsmetalle der Gruppe VI b und/oder VIII des Periodensystems wie. Ni, Co, Mo, W verwendet. Man kann aber zusätzlich Edelmetalle wie Pd, Pt und Seltene Erdmetalle wie Ce, La zur Dotierung der Zeolithe einsetzen.

Bei manchen metalldotierten Zeolithen ist eine Nachbehandlung mit Wasserstoff vorteilhaft. Eine weitere Möglichkeit der Modifizierung besteht darin, daß man das zeolithische Material - vorformt oder unverformt -einer Behandlung mit Säuren wie Salzsäure und/oder Flußsäure und/oder Wasserdampf unterwirft. Dabei geht man vorteilhaf z.B. so vor, daß man Zeolithe in Pulverform mit 0,001 n - 2 n vorzugsweise 0,05 - 0,5 n Flußsäure 1 Stunde bei 80°C behandelt. Nach der Behandlung wird mit Wasser gewaschen, bei 110°C/16 h getrocknet und bei 500°C/20 h calciniert. Nach einer anderen Arbeitsweise behandelt man Zeolithe vor oder nach ihrer Verformung mit Bindemitteln, z.B. 1 bis 3 Stunden bei Temperaturen von 60 bis 80°C mit einer 3-bis 25 gew.-%igen, insbesondere 12 bis 20 gew.-%igen wäßrigen Salzsäure. Anschließend wird der so behandelte Zeolith mit Wasser gewaschen, getrocknet und bei 400°C bis 500°C calciniert.

Eine besondere Ausführungsform für die Säurebehandlung besteht darin, daß man das zeolithische Material vor seiner Verformung bei erhöhter Temperatur mit Flußsäure, die zweckmäßig als 0,001 n bis 2 n, vorzugsweise 0,05 n bis 0,5 n Flußsäure eingesetzt wird, behandelt, beispielsweise durch Erhitzen und Rückfluß über einen Zeitraum von 0,5 h bis 5 h, vorzugsweise 1 bis 3 Stunden. Nach Isolierung, z.B. durch Abfiltrieren und Auswaschen, des zeolithischen Materials wird dieses zweckmäßig, z.B. bei Temperaturen von 100°C bis 160°C, getrocknet und bei Temperaturen von 450°C bis 600°C calciniert. Gemäß einer weiteren bevorzugten Ausführungsform für die Säurebehandlung wird das zeolithische Material nach einer Verformung mit Bindemittel bei erhöhter Temperatur, zweckmäßig bei Temperaturen von 50°C bis 90°C, vorzugsweise 60°C bis 80°C, über einen Zeitraum von 0,5 h bis 5 h, vorzugsweise mit 12 bis 20 gew.-%iger Salzsäure, behandelt. Anschließend wird das zeolithische Material ausgewaschen und bei Temperaturen von 100°C bis 160°C, getrocknet und bei Temperaturen von 450°C bis 600°C calciniert.

Die Herstellung von Katalysatoren für das erfindungsgemäße Verfahren kann durch Mischen einer Aluminiumoxidkomponente und einer Siliciumdioxidkomponente oder einem Alumosilikat mit einem Borosilikatzeolithen, gegebenenfalls unter Zusatz eines Zeolithen des Faujasittyps und einem Peptisierungsmittel erfolgen. Der Wassergehalt des eingesetzten $SiO_2$-Gels soll im Bereich 80 bis 95 Gew.-% liegen. Der Gewichtsanteil an Borosilikatzeolith im Träger kann im Bereich von 1 bis 60 Gew.-%, bevorzugt 5 bis 25 Gew.-% variiert werden. An amorphen Trägeranteilen können 20 bis 95 Gew.-% Aluminiumoxid, bevorzugt 30 bis 60 Gew.-% sowie 5 bis 50 Gew.-% Siliciumdioxid, bevorzugt 20 bis 40 Gew.-% eingesetzt werden. Nach intensivem Mischen wird die Paste durch eine Matrize mit einem Durchmesser zwischen 1 und 3 mm extrudiert und anschließend getrocknet und bei höheren Temperaturen calciniert.

Die Hydrierkomponenten können in das feuchte Trägergemisch eingearbeitet und/oder durch Auftränken auf den Katalysatorträger aufgebracht werden. Die Katalysatorteilchen werden hierzu z.B. mit einer Lösung, die die gewünschten Hydrierkomponenten enthält, in Berührung gebracht. Die Lösungsmenge entspricht der zuvor bestimmten Wasseraufnahme der Katalysatorteilchen. An Hydriermetallkomponenten werden bevorzugt Co, Ni, Mo und Wo, z.B. in Form von Ammoniumheptamolybdat, Nickelnitrat, Ammoniummetawolframat, Cobaltnitrat eingesetzt. Der fertige Katalysator wird nach erneuter Trocknung und Calcinierung erhalten und kann 2 bis 10 Gew.-% Nickel-bzw. Cobaltoxid und 10 bis 25 Gew.-% Molybdän bzw. Wolfram, berechnet als $MoO_3$ und $WO_3$ enthalten. Dem Katalysator können auch Phosphorkomponenten und zwar sowohl beim Mischen der Trägerkomponenten als auch als Bestandteil der Tränklösung beigemengt werden. Gewöhnlich werden hierbei Mengen im Bereich 1 bis 12 Gew.-% $P_2O_5$ bezogen auf den fertigen Katalysator zugesetzt.

Vor der Verwendung des Katalysators wird dieser durch Schwefelung von der oxidischen in die aktivere sulfidische Form, z.B. durch Überleiten eines Gemisches aus Wasserstoff und $H_2S$, umgewandelt.

Als Ausgangsstoff für das Verfahren können leichte und schwere Gasöle, Vakuumgasöle, Rückstandsöle und Mischungen davon im Siedebereich oberhalb 200°C mit Dichtewerten (15°C) von 0,840 bis 1,0 g/cm³ eingesetzt werden. Typisch sind Schwefelgehalte zwischen 0,5 und 2,8 Gew.-%, Stickstoffgehalte zwischen 350 und 1800 mg/kg.

Die Verfahrensbedingungen für das Hydrocracken der genannten Mineralölfraktionen liegen innerhalb folgender Bereiche:

Temperatur [°C]     150 bis 500
Druck [bar]     20 bis 200
WHSV [kg/l x h]     0,1 bis 10
$H_2$/Öl [Nm³/kg]     0,1 bis 20

Beispiele:

Katalysatoren sowie eingesetzte Borosilikatzeolithe werden wie folgt hergestellt:

Synthese des Borosilikatzeolithen:

Ein Borosilikatzeolith des Pentasil-Typs wird in einer hydrothermalen Synthese aus 640 g hochdispersem $SiO_2$, 122 g $K_2BO_3$, 8000 g einer wäßrigen 1,6-Hexandiamin-Lösung (Mischung 50 : 50 Gew.-%) bei 170°C unter autogenem Druck in einem Rührautoklaven ohne Alkalizusatz hergestellt. Nach Abfiltrieren und Auswaschen wird das kristalline Reaktionsprodukt bei 100°C/24 h getrocknet und bei 500°C/24 h calciniert. Dieser Borosilikatzeolith setzt sich zusammen aus 94,2 Gew.-% $SiO_2$ und 2,3 Gew.-% $B_2O_3$.

Herstellung des Katalysators A:

Ein feuchtes Trägergemisch aus 10 Gew.-% Borosilikatzeolith und 90 Gew.-% spaltaktives amorphes Trägermaterial, bestehend aus 40 Gew.-% $SiO_2$ und 60 Gew.-% $Al_2O_3$, wird durch eine 1,5 mm Matrize extrudiert, anschließend bei 150°C getrocknet und 5 Stunden bei 500°C calciniert. Die Hydrierkomponenten werden als Nickelnitrat und als Ammoniummeta-wolframat-Lösung hinzugeführt. Die Anteile bezogen auf den getrockneten und calcinierten Katalysator liegen bei 22 Gew.-% $WO_3$ -5 Gew.-% NiO und 4,6 Gew.-% $PO_4$.

4

Herstellung Katalysator (B) (Vergleichskatalysator)

Die Herstellung entspricht der des Katalysators A, wobei lediglich 15 % HY-Zeolith anstelle des Borosilikatzeolithen verwendet werden.

Herstellung des Katalysators C (Vergleichskatalysator)

Die Herstellung entspricht der der Katalysatoren A und B. Im Träger ist jedoch kein Zeolithanteil enthalten.

Die Versuche wurden mit einem schweren Gasöl (Iranian heavy) ausgeführt.

Eigenschaften:Dichte (15°C) [g/cm$^3$]     0,889

Siederverlauf ASTM D 1160 [°C] SB     240
10 [Vol.-%]     313
50 [Vol.-%]     390
90 [Vol.-%]     442
SE     470
Schwefelgehalt [Gew.-%]     1,5
Stickstoffgehalt [mg/kg]     800
Pourpoint [°C]     24
Stockpunkt [°C]     22

Reaktionsbedingungen:$H_2$-Druck [bar]     115
WHSV (Frischprodukt [kg/l x h]     0,69
$H_2$/ÖL [Nm$^3$/kg]     1,0

Schwefel-und Stickstoffverbindungen werden in einem Vorreaktor weitgehend abgebaut. Die über 350°C siedenden Anteile werden in den Hydrocrackreaktor zurückgeführt. Die durch das erfindungsgemäße Verfahren erreichten Verbesserungen der Kälteeigenschaften des Mitteldestillats im Siedebereich 235°C bis 350°C zeigt die folgende Tabelle, in der Pourpoint, Cloudpoint, Stockpunkt und CFPP des mit unterschiedlichen Katalysatoren erzeugten Mitteldestillats gegenübergestellt sind.

Beispiel

### Katalysator

| | 1 | 2 | 3 |
| | A | B | C |
| --- | --- | --- | --- |
| Konversion (per pass)   350°C [Gew.-%] | 65 | 65 | 62 |
| Reaktionstemperatur [°C] | 410 | 408 | 418 |
| Pourpoint [°C] | − 21 | − 4 | − 7 |
| Stockpunkt [°C] | − 23 | − 5 | − 10 |
| CFPP | − 21 | − 6 | − 9 |
| Cloudpoint | − 20 | − 2 | − 6 |

Während durch das erfindungsgemäße Verfahren (Beispiel 1) z.B. die festgelegten Mindestanforderungen hinsichtlich des Pourpoints für Heizöl EL nach DIN 51603 sowie bezüglich des CFPP-Wertes für Dieselkraftstoffe nach DIN 51428 deutlich unterschritten werden, können die Mindestanforderungen von -6°C bzw. -12°C in den Beispielen 2 und 3 nicht eingehalten werden. Die Cetanzahl, die mit Katalysator A erreicht wird, liegt mit 51 deutlich über den Mindestanforderungen nach DIN 51601.

## Ansprüche

1. Verfahren zur Herstellung von Mitteldestillaten mit verbesserten Kälteeigenschaften durch Hydrocracken von Mineralölfraktionen wie leichten und schweren Gasölen, Vakuumgasölen, Rückstandsölen und Mischungen derselben bei Drucken von 20 bis 200 bar, Temperaturen von 150 bis 500°C und spezifischen Katalysatorbelastungen WHSV zwischen 0,1 und 10 kg/l x h, dadurch gekennzeichnet, daß man den Ausgangsstoff mit Wasserstoff in Gegenwart eines Katalysators behandelt, der einen kristallinen Borosilikatzeolith vom Pentasiltyp, ein spaltaktives amorphes Aluminiumsilikat als Trägermaterial und ein oder mehrere Metalle aus der Gruppe VI b und/oder Gruppe VIII des Periodensystems enthält.

2. Verfahren nach Anspruch 1, dadurch gekennzeichnet, daß der Anteil des kristallinen Borosilikatzeolithen im Katalysator 1 bis 60 Gew.-% beträgt.

3. Verfahren nach Anspruch 1, dadurch gekennzeichnet, daß das Molverhältnis $SiO_2/B_2O_3$ größer als 20 ist.

## EINSCHLÄGIGE DOKUMENTE

EP 88100564.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | EP - A3 - 0 079 779 (STANDARD OIL COMPANY)<br><br>* Ansprüche 1-4,6,7,9,11-16,21, 22; Seite 19, Zeilen 19-28; Seite 31, Zeilen 16-36 *<br><br>-- | 1,3 | C 10 G 47/20<br><br>B 01 J 21/02<br><br>B 01 J 29/36 |
| A | DE - A1 - 3 140 895 (BASF)<br><br>* Ansprüche 1,2,7; Seite 6, Zeilen 25-31; Seite 11, Zeilen 19-22 *<br><br>---- | 1,3 | |

RECHERCHIERTE
SACHGEBIETE (Int. Cl.4)

C 10 G

B 01 J

Der vorliegende Recherchenbericht wurde für alle Patentansprüche erstellt.

| Recherchenort | Abschlußdatum der Recherche | Prüfer |
|---|---|---|
| WIEN | 27-05-1988 | BÖHM |